# FASCICULE DE BREVET EUROPEEN

(11) **EP 1 379 453 B1**
(45) Date de publication et mention de la délivrance du brevet: **18.08.2004**
(21) Numéro de dépôt: 02724403.7
(22) Date de dépôt: 03.04.2002
(51) Int. Cl.: B65G 49/06

(54) **PROCEDE ET INSTALLATION DE MANUTENTION ET DE POSITIONNEMENT D'ELEMENTS DE SEPARATION ENTRE DES EMPILEMENTS D'ELEMENTS PLATS, ET UTILISATION ASSOCIEE**
VERFAHREN UND VORRICHTUNG ZUR BEARBEITUNG UND POSITIONIERUNG VON TRENNELEMENTEN ZWISCHEN STAPELBAREN FLACHELEMENTEN UND ANWENDUNG
METHOD AND INSTALLATION FOR HANDLING AND POSITIONING ELEMENTS SEPARATING STACKS OF FLAT ELEMENTS, AND RELATED USE

(30) Priorité: 04.04.2001 FR 0104557
(43) Date de publication de la demande: 14.01.2004
(73) Titulaire: SAINT-GOBAIN GLASS FRANCE, 92400 Courbevoie (FR)
(72) Inventeur: DELANEF, Jean-Jacques, F-60170 Ribecourt/Dreslincourt (FR); GODARD, Lionel, F-60150 Le Pessis Brion (FR); DERING, Marius, F-02410 Saint Gobain (FR); PILON, Philippe Chez Mme. Laurence Petrowich, F-60280 Margny Les Compiegne (FR)
(74) Mandataire: Colombier, Christian
(86) Numéro de dépôt international: PCT/FR2002/001149
(87) Numéro de publication internationale: WO 2002/081345

(56) Documents cités:
- FR-A- 1 288 737
- FR-A- 2 348 129
- FR-A- 2 603 566
- US-A- 4 413 820
- US-A- 5 632 595

## Description

L'invention concerne la formation d'empilements d'éléments plats disposés verticalement ou sensiblement verticalement.

Plus précisément, il s'agit d'intercaler entre de tels éléments plats des éléments dits intercalaires qui peuvent être disposés entre un ou plusieurs éléments plats.

Une application intéressante de l'invention concerne la mise en place d'intercalaires cartonnés entre des empilements de feuilles de verre.

L'invention concerne l'installation nécessaire, le procédé pour la manutention et le positionnement, ainsi que l'utilisation de l'installation et la mise en oeuvre du procédé pour former en final de tels empilements.

On connaît déjà, par exemple dans le document FR 2 348 129 un ensemble de manutention de profilés en verre qui sont regroupés par lots avec interposition d'intercalaires entre paires et entre profilés d'une même paire. Cet ensemble est automatisé, depuis la prise individuelle de chaque profité, la formation de paires de profilés, et l'interposition des intercalaires, jusqu'à la formation finale d'un lot de profilés ainsi conditionnés.

Bien évidemment, cet ensemble est d'un fonctionnement complexe donc sujet à arrêts plus ou moins fréquents ce qui est nuisible à son rendement.

Par ailleurs, les intercalaires envisagés dans cet art antérieur sont en papier, issus d'un rouleau qui est coupé au fur et à mesure du déroulement du processus.

La présente invention vise des applications voisines mais quelque peu différentes cependant car il s'agit en effet de former des empilements d'éléments plats tels que des feuilles de verre, avec interposition d'intercalaires par exemple en carton.

Pour ce type d'application, les intercalaires étaient jusqu'à présent déposés manuellement. Plus précisément, on formait, en sortie de chaîne de fabrication, une pile de feuilles de verre disposées sensiblement verticalement. Puis on arrêtait la dépose des feuilles de verre, un homme venait alors plaquer un ou plusieurs intercalaires contre la feuille de verre d'extrémité; ensuite soit on continuait à déposer d'autres feuilles de verre contre les intercalaires soit on emballait l'empilement ainsi formé. Dans tous les cas il était obligatoire d'arrêter la formation des empilements pendant la mise en place des intercalaires, d'où un rendement moyen.

Bien entendu, la sécurité d'un tel système n'est pas optimale puisque la présence physique d'un homme dans un tel ensemble nécessite un arrêt total de la machine de dépose des feuilles de verre, ce qui malheureusement n'a pas toujours été le cas. On cherche donc à éviter au maximum toute présence humaine dans un tel processus.

Par ailleurs, l'homme ne met pas forcément les intercalaires toujours exactement à la même place, de sorte que l'empilement final peut présenter des zones de moindre résistance mécanique; en outre des intercalaires placés de façon plus ou moins alignée peuvent produire des tassements des empilements, notamment à cause de l'humidité ainsi créée.

La présente invention vise notamment à remédier aux inconvénients évoqués ci-dessus.

Elle représente une amélioration notable vis-à-vis de l'art antérieur, notamment en termes de sécurité, de rendement et de qualité de la production.

Ainsi, la présente invention a globalement pour objet une installation pour la manutention et le positionnement d'éléments de séparation entre des empilements d'éléments plats disposés verticalement.

Selon l'invention, l'installation comprend notamment une ossature-porteuse; au moins un ensemble coulissant horizontalement sur un sous-ensemble de la structure-porteuse ; au moins un moyen de préhension des éléments de séparation lié à l'ensemble coulissant; au moins un moyen de détection de présence d'un élément de séparation à proximité dudit moyen de préhension; un dispositif de déplacement vertical dudit sous-ensemble de la structure-porteuse ; des moyens d'arrêt de l'ensemble-coulissant; des moyens de commande et d'asservissement de l'ensemble-coulissant, des moyens de préhension et des détecteurs de présence.

Plus précisément, l'ossature-porteuse comprend au moins deux poutres verticales munies d'un élément de type crémaillère pour le déplacement vertical dudit sous-ensemble, associé à des poutres horizontales.

Par ailleurs, le sous-ensemble est déplaçable verticalement sur la structure-porteuse et comprend notamment un rail horizontal, et un rail vertical qui coopère avec le dispositif de déplacement vertical.

De façon plus précise, l'ensemble coulissant est constitué d'un portique muni de moyens de coulissement dans le rail horizontal.

Selon une particularité de l'invention, ledit portique comprend notamment un rail-support des éléments de préhension relié à un rail-support du détecteur de présence d'un élément de séparation.

Préférentiellement, les moyens de préhension comprennent des griffes dont le mouvement est commandé par le détecteur de présence d'éléments de séparation.

Selon une caractéristique de l'invention, ledit moyen de détection de présence comprend un microrupteur (micro-switch en anglais) logé dans ledit rail-support.

Conformément à une autre caractéristique de l'invention, les moyens d'arrêt de l'ensemble coulissant comprennent des butées mécaniques et/ou électriques disposées à proximité du milieu de la structure-porteuse.

Avantageusement, les moyens de commande et d'asservissement réagissent en outre au temps d'immobilisation de l'ensemble coulissant au milieu de ladite structure-porteuse.

En outre l'installation selon l'invention peut comprendre des portillons de sécurité destinés à empêcher l'accès à la zone centrale de l'installation.

L'invention vise en outre un procédé de manutention et de positionnement d'éléments de séparation entre des empilements d'éléments plats (V) disposés verticalement; un premier empilement étant déjà en place, le procédé est caractérisé en ce qu'il consiste à
- fixer au moins un élément de séparation sur un ensemble coulissant horizontalement disposé dans une position dite de repos ;
- attendre un ordre de déplacement de l'ensemble coulissant ;
- amener l'ensemble-coulissant dans une zone de dépose, jusqu'à un moyen d'arrêt ;
- amener un autre élément plat verticalement, contre l'élément de séparation ;
- libérer le ou les éléments de séparation ;
- relever l'ensemble-coulissant ;
- le faire translater pour retour en position de repos ;
- abaisser l'ensemble-coulissant.

Selon une caractéristique de l'invention, on fixe indépendamment chacun des éléments de séparation sur un élément de préhension et on les dépose également individuellement.

Conformément à un mode de réalisation de l'invention, on asservit la fermeture des moyens de préhension sur l'élément de séparation à la présence dudit élément de préhension, grâce à un détecteur approprié.

Sans sortir du cadre de l'invention, on asservit l'ouverture des moyens de préhension au dépôt d'au moins un élément plat (V) sur les éléments de séparation.

Préférentiellement, on sécurise l'accès à la zone de dépose grâce à des portillons escamotables placés en périphérie de ladite zone.

De façon avantageuse, les éléments de séparation sont des intercalaires cartonnés et les empilements sont formés de plaques de verre (V).

L'invention a par ailleurs pour objet l'utilisation de l'installation pour réaliser des empilements de plaques de verre (V) séparés par des éléments tels que des intercalaires cartonnés.

D'autres caractéristiques, détails, améliorations, et autres avantages de l'invention apparaîtront mieux à la lecture de la description qui va suivre, faite à titre illustratif et nullement limitatif, en référence aux dessins annexés sur lesquels :
- la figure 1 est un schéma d'ensemble d'un mode de réalisation de l'invention ; et
- la figure 2 est un schéma plus détaillé d'une partie de l'ensemble coulissant.

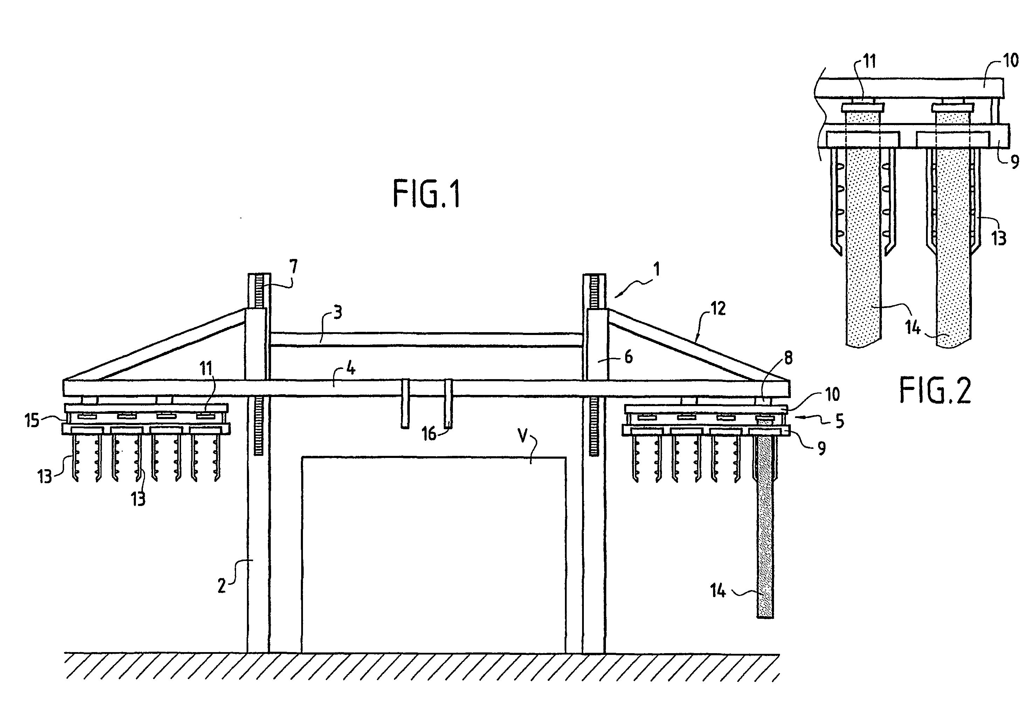

La figure 1 illustre donc par un schéma simplifié l'installation dans son ensemble.

Celle-ci comprend une ossature 1 métallique porteuse formée de piliers verticaux 2 et de poutres horizontales 3, 4.

L'une des poutres horizontales 4 s'étend sur toute la largeur de l'installation et est préférentiellement constituée d'un rail pour le support et le glissement d'au moins un ensemble coulissant ou portique 5.

Le rail 4 est lié d'une part à plusieurs rails verticaux 6 et à d'autres poutres afin de former un sous-ensemble rigide 12 qui peut se déplacer verticalement sur les piliers verticaux 2. Des éléments 7 de type crémaillère, liés aux piliers 2, permettent cette liaison.

Selon un mode préféré de l'invention deux sous-ensembles 12 sont prévus, de part et d'autre des piliers verticaux 2.

Sans sortir du cadre de l'invention, un seul sous-ensemble pourrait être envisagé, moyennant quelques adaptations.

L'environnement de l'installation, plus ou moins spacieux, guidera le choix.

L'ensemble coulissant ou portique 5 comprend notamment des moyens 8 de coulissement dans le rail 4. Ces moyens 8 peuvent être des galets (roues) dont le déplacement est motorisé et asservi comme il sera explicité ci-après. On peut envisager par exemple deux moyens 8 par portique, voire plus selon le cas.

Le portique 5 est en outre constitué d'un rail inférieur 9 destiné au support d'éléments ou griffes de préhension 13 ; selon le mode de réalisation illustré par la figure 1, quatre griffes sont supportées sur chaque portique 5.

Un rail supérieur 10 assure la liaison entre les éléments de coulissement 8 et le rail inférieur 9 ; il supporte un ou plusieurs détecteurs 11 de présence des éléments de séparation 14.

Les capteurs 11 sont avantageusement disposés en regard des griffes 13.

Les rails inférieur 9 et supérieur 10 sont parallèles, à une certaine distance l'un de l'autre. Des moyens 15 assurent cette liaison.

Par ailleurs, des portillons de sécurité (non représentés) peuvent être prévus, latéralement, afin d'empêcher tout accès humain à la zone centrale de l'installation, là ou a lieu la dépose automatique à la fois des vitres et des éléments de séparation 14.

De plus, des butées 16, ici de type mécanique, sont prévues pour marquer la fin de course du portique 5, en zone centrale.

Sur la partie gauche de la figure 2, les griffes 13 ne sont pas encore en prise sur l'élément de séparation ou intercalaire 14 ; tandis qu'elles le sont sur la partie droite de cette figure. C'est un microrupteur 11 qui permet de déclencher la fermeture des griffes 13, lorsque l'intercalaire 14 est mis en contact avec ce microrupteur 11.

Le séquencement des opérations va maintenant être explicité plus en détail.

De façon manuelle ou éventuellement automatique, on vient positionner un intercalaire 14 entre des griffes ouvertes 13 jusqu'à ce qu'il soit au contact du détecteur 11. Comme il a été dit, ceci déclenche la fermeture des griffes 13 sur l'intercalaire 14.

On place ainsi autant d'intercalaires 14 que nécessaire sur le (ou les) portique(s) 5 en position de « départ ».

On est alors en attente d'une demande, ordre donné par un ensemble d'asservissement et d'automatisation.

Lorsque cet ordre est donné, le déplacement horizontal du portique 5 est déclenché, vers le centre de l'installation (zone de dépose).

Si des portillons de sécurité sont présents, ils auront bien entendu été dégagés avant le passage du portillon 5 portant des intercalaires 14.

Arrivé vers le centre de l'installation, les portiques 5 peuvent être d'abord freinés, grâce à des capteurs de ralentissement, puis ils sont arrêtés par les butées 16.

Les intercalaires 14 étant ainsi positionnés au plus près de l'empilement de vitres V, on enchaîne en déposant au moins une autre vitre (sur la face des intercalaires 14 opposés à l'empilement) afin de coincer les intercalaires qui sont ainsi pris en sandwich entre deux empilements. Ceci évite qu'un intercalaire 14 ne tombe ou ne glisse ou ne soit déplacé par le mouvement de l'air lors du déplacement d'une vitre (v).

Une fois le (ou les) intercalaires coincés, on ouvre alors les griffes 13, on remonte le portique 5 afin de dégager les griffes 13 de l'empilement puis on fait translater le (ou les) portique(s) 5 latéralement en-dehors de la zone centrale où se trouve l'empilement.

Arrivé là, on redescend (de quelques centimètres) le portique 5 (hauteur dépose), qui revient ainsi en position de « départ ».

Ce cycle étant automatisé, les interventions humaines sont limitées de sorte que la sécurité est grandement améliorée. En outre le caractère répétitif et précis des opérations garantit une très bonne qualité de la dépose des intercalaires et permet de former des empilements très stables et très bien formés.

## Revendications

1. Installation pour la manutention et le positionnement d'éléments de séparation entre des empilements d'éléments plats (V) disposés verticalement, **caractérisée en ce qu'**elle comprend une ossature-porteuse (1 ), au moins un ensemble (5) coulissant horizontalement sur un sous-ensemble (12) de l'ossature-porteuse (1), au moins un moyen de préhension (13) des éléments de séparation (14) lié à l'ensemble (5) coulissant horizontalement, au moins un moyen (11) de détection de présence d'un élément de séparation (14) à proximité dudit moyen de préhension (13), un dispositif (7) de déplacement vertical dudit sous-ensemble (12) de l'ossature-porteuse (1), des moyens d'arrêt de l'ensemble-coulissant (5), des moyens de commande et d'asservissement de l'ensemble-coulissant (5).

2. Installation selon la revendication précédente, **caractérisée en ce que** l'ossature-porteuse comprend au moins deux poutres verticales (2) munies d'un élément (7) de type crémaillère pour le déplacement vertical dudit sous-ensemble (12), associé à des poutres horizontales (3).

3. Installation selon l'une quelconque des revendications précédentes, **caractérisée en ce que** le sous-ensemble (12) est déplaçable verticalement sur l'ossature-porteuse (1) et comprend notamment un rail horizontal (4), et un rail vertical (6) qui coopère avec le dispositif de déplacement vertical (7).

4. Installation selon l'une quelconque des revendications précédentes, **caractérisée en ce que** l'ensemble coulissant (5) est notamment constitué d'un portique (5) muni de moyens (8) de coulissement dans le rail horizontal (4).

5. Installation selon la revendication précédente, **caractérisée en ce que** ledit portique comprend notamment un rail-support (9) des éléments de préhension (13) relié à un rail-support (10) du détecteur de présence (11) d'un élément de séparation (14).

6. Installation selon l'une quelconque des revendications précédentes, **caractérisée en ce que** les moyens de préhension (13) comprennent des griffes dont le mouvement est notamment commandé par le détecteur de présence (11) d'éléments de séparation.

7. Installation selon la revendication précédente **caractérisé en ce que** les griffes sont adaptées à la préhension d'intercalaires cartonnés.

8. Installation selon l'une quelconque des revendications précédentes, **caractérisée en ce que** ledit moyen (11) de détection de présence comprend un microrupteur logé dans ledit rail-support (10).

9. Installation selon l'une quelconque des revendications précédentes, **caractérisée en ce que** les moyens d'arrêt de l'ensemble coulissant (5) comprennent des butées mécaniques et/ou électriques disposées à proximité du milieu de l'ossature-porteuse.

10. Installation selon l'une quelconque des revendications précédentes, **caractérisée en ce que** les moyens de commande et d'asservissement réagissent en outre au temps d'immobilisation de l'ensemble coulissant au milieu de ladite ossature-porteuse.

11. Installation selon l'une quelconque des revendications précédentes, **caractérisée en ce qu'**elle comprend en outre des portillons de sécurité destinés à empêcher l'accès à la zone centrale de l'installation.

12. Installation selon l'une quelconque des revendications précédentes, **caractérisé en ce que** l'ossature porteuse comprend au moins deux poutres verticales (2) et deux sous-ensembles de part et d'autre desdites poutres.

13. Procédé de manutention et de positionnement d'éléments de séparation (14) entre des empilements d'éléments plats (V) disposés verticalement, un premier empilement étant déjà en place, procédé **caractérisé en ce qu'**il consiste à
- fixer au moins un élément de séparation (14) sur un ensemble (5) coulissant horizontalement disposé dans une position dite de repos,
- attendre un ordre de déplacement de l'ensemble coulissant (5),
- amener l'ensemble-coulissant (5) dans une zone de dépose, jusqu'à un moyen d'arrêt (16),
- déposer le ou les éléments de séparation (14) contre une face de l'empilement,
- amener un autre élément plat (v) verticalement contre l'élément de séparation (14),
- relever l'ensemble-coulissant (5),
- le faire translater pour retour en position de repos,
- abaisser l'ensemble-coulissant (5).

14. Procédé selon la revendication précédente, **caractérisé en ce que** l'on fixe indépendamment chacun des éléments de séparation (14) sur un élément de préhension (13) et **en ce qu'**on les dépose également individuellement.

15. Procédé selon l'une quelconque des revendications de procédé, **caractérisé en ce que** l'on asservit la fermeture des moyens de préhension (13) sur l'élément de séparation (14) à la présence dudit élément de préhension (14), grâce à un détecteur approprié (11).

16. Procédé selon l'une quelconque des revendications de procédé, **caractérisé en ce qu'**on asservit l'ouverture des moyens de préhension au dépôt d'au moins un élément plat (V) sur les éléments de séparation (14).

17. Procédé selon l'une quelconque des revendications de procédé, **caractérisé en ce que** l'on sécurise l'accès à la zone de dépose grâce à des portillons escamotables placés en périphérie de ladite zone.

18. Procédé selon l'une quelconque des revendications de procédé, **caractérisé en ce que** les éléments de séparation (14) sont des intercalaires cartonnés et **en ce que** les empilements sont formés de plaques de verre (V).

19. Utilisation de l'installation selon l'une quelconque des revendications 1 à 11 pour réaliser des empilements de plaques de verre (V) séparés par des éléments tels que des intercalaires cartonnés (14).

## Patentansprüche

1. Vorrichtung zur Handhabung und Positionierung von Trennelementen in Stapeln aus vertikal angeordneten flachen Elementen (V), **dadurch gekennzeichnet, dass** sie eine Tragkonstruktion (1), mindestens eine Einheit (5), die auf einer Unterbaugruppe (12) der Tragkonstruktion (1) horizontal hin- und herbewegbar ist, mindestens ein Mittel (13) zum Ergreifen der Trennelemente (14), das mit der horizontal hin- und herbewegbaren Einheit (5) verbunden ist, mindestens ein Mittel (11) zum Feststellen des Vorhandenseins eines Trennelementes (14) in der Nähe des Greifmittels (13), eine Einrichtung (7) zur vertikalen Bewegung der Unterbaugruppe (12) der Tragkonstruktion (1), Mittel zum Anhalten der hin- und herbewegbaren Einheit (5) und Mittel zur Steuerung und Regelung der hin- und herbewegbaren Einheit (5) umfasst.

2. Vorrichtung nach dem vorhergehenden Anspruch, **dadurch gekennzeichnet, dass** die Tragkonstruktion mindestens zwei vertikale Träger (2) umfasst, die mit einer Einrichtung (7) vom Typ einer Zahnstange für die vertikale Bewegung der Unterbaugruppe (12), das mit horizontalen Trägem (3) verbunden ist, versehen sind.

3. Vorrichtung nach einem der vorhergehenden Ansprüche, **dadurch gekennzeichnet, dass** die Unterbaugruppe (12) auf der Tragkonstruktion (1) vertikal bewegbar ist und insbesondere eine horizontale Schiene (4) und eine vertikale Schiene (6) umfasst, die mit der Einrichtung (7) zur vertikalen Bewegung zusammenwirkt.

4. Vorrichtung nach einem der vorhergehenden Ansprüche, **dadurch gekennzeichnet, dass** die hin- und herbewegbare Einheit (5) insbesondere von einem Portalrahmen (5) gebildet wird, der mit Mitteln (8) zur Hin- und Herbewegung in der horizontalen Schiene (4) versehen ist.

5. Vorrichtung nach dem vorhergehenden Anspruch, **dadurch gekennzeichnet, dass** der Portalrahmen insbesondere eine Schiene (9) zum Tragen der Greifelemente (13) umfasst, die mit einer Tragschiene (10) für den Detektor (11) für die Feststellung des Vorhandenseins eines Trennelements (14) verbunden ist.

6. Vorrichtung nach einem der vorhergehenden Ansprüche, **dadurch gekennzeichnet, dass** die Greifmittel (13) Zangen umfassen, deren Bewegung insbesondere von dem Detektor (11) für das Vorhandensein von Trennelementen gesteuert wird.

7. Vorrichtung nach dem vorhergehenden Anspruch, **dadurch gekennzeichnet, dass** die Zangen für das Ergreifen von Papp-Zwischenlagen geeignet sind.

8. Vorrichtung nach einem der vorhergehenden Ansprüche, **dadurch gekennzeichnet, dass** das Detektionsmittel (11) einen Mikroschalter umfasst, der sich in der Tragschiene (10) befindet.

9. Vorrichtung nach einem der vorhergehenden Ansprüche, **dadurch gekennzeichnet, dass** die Mittel zum Anhalten der hin- und herbewegbaren Einheit (5) mechanische und/oder elektrische Anschläge umfassen, die in der Nähe der Mitte der Tragkonstruktion angeordnet sind.

10. Vorrichtung nach einem der vorhergehenden Ansprüche, **dadurch gekennzeichnet, dass** die Mittel zur Steuerung und Regelung außerdem auf die Haltezeit der hin- und herbewegbaren Einheit in der Mitte der Tragkonstruktion reagieren.

11. Vorrichtung nach einem der vorhergehenden Ansprüche, **dadurch gekennzeichnet, dass** sie darüber hinaus Sicherheitstüren umfasst, die vorgesehen sind, den Zugang zum zentralen Bereich der Vorrichtung zu verhindern.

12. Vorrichtung nach einem der vorhergehenden Ansprüche, **dadurch gekennzeichnet, dass** die Tragkonstruktion mindestens zwei vertikale Träger (2) und zwei Unterbaugruppen auf beiden Seiten dieser Träger umfasst.

13. Verfahren zur Handhabung und Positionierung von Trennelementen (14) in Stapeln aus vertikal angeordneten flachen Elementen (V), wobei ein erster Stapel sich bereits an seinem Platz befindet, **dadurch gekennzeichnet, dass** es aus dem
- Befestigen mindestens eines Trennelements (14) auf einer horizontal hin- und herbewegbaren Einheit (5), die in einer Ruheposition angeordnet ist,
- Erwarten eines Befehls zur Bewegung der hin- und herbewegbaren Einheit (5),
- Bringen der hin- und herbewegbaren Einheit (5) in einen Ablegebereich bis zu einem Haltemittel (16),
- Anordnen des/der Trennelemente/s (14) an einer Seite des Stapels,
- Bringen eines weiteren flachen Elementes (V) vertikal an das Trennelement (14),
- Anheben der hin- und herbewegbaren Einheit (5),
- diese linear Bewegen, um sie in die Ruheposition zurückzubringen, und
- Absenken der hin- und herbewegbaren Einheit (5),
besteht.

14. Verfahren nach dem vorhergehenden Anspruch, **dadurch gekennzeichnet, dass** die Trennelemente (14) unabhängig voneinander von einem Greifelement (13) aufgenommen werden, und dass sie auch einzeln abgelegt werden.

15. Verfahren nach einem der Verfahrensansprüche, **dadurch gekennzeichnet, dass** das Schließen der Greifmittel (13) um das Trennelement (14) bei Anwesenheit des Greifelements (14) von einem geeigneten Detektor (11) geregelt wird.

16. Verfahren nach einem der Verfahrensansprüche, **dadurch gekennzeichnet, dass** die Öffnung der Greifmittel beim Ablegen mindestens eines flachen Elementes (V) auf den Trennelementen (14) geregelt wird.

17. Verfahren nach einem der Verfahrensansprüche, **dadurch gekennzeichnet, dass** der Zugang zum Ablagebereich von einklappbaren Türen geert wird, die um diesen Bereich herum angeordnet sind.

18. Verfahren nach einem der Verfahrensansprüche, **dadurch gekennzeichnet, dass** die Trennelemente (14) Papp-Zwischenlagen sind, **und dass** die Stapel von Glascheiben( V) gebildet werden.

19. Verwendung der Vorrichtung nach einem der Ansprüche 1 bis 11 zur Herstellung von Stapeln aus Glasscheiben (V), die durch Elemente wie Papp-Zwischenlagen (14) voneinander getrennt sind.

## Claims

1. Installation for the handling and positioning of separation elements between stacks of flat elements (V) disposed vertically, **characterised in that** it comprises a carrier framework (1), at least one assembly (5) sliding horizontally on a sub-assembly (12) of the carrier framework (1), at least one gripping means (13) the separation elements (14) connected to the horizontally sliding assembly (5), at least one means (11) of detecting the presence of a separation element (14) close to the said gripping means (13), a device (7) for the vertical movement of the said sub-assembly (12) of the carrier framework (1), means of stopping the sliding assembly (5), and means of controlling and slaving the sliding assembly (5).

2. Installation according to the preceding claim, **characterised in that** the carrier framework comprises at least two vertical beams (2) provided with a rack type element (7) for the vertical movement of the said sub-assembly (12), associated with horizontal beams (3).

3. Installation according to any one of the preceding claims, **characterised in that** the sub-assembly (12) can be moved vertically on the carrier framework (1) and comprises in particular.a horizontal rail (4) and a vertical rail (6) which cooperates with the vertical-movement device (7).

4. Installation according to any one of the preceding claims, **characterised in that** the sliding assembly (5) consists in particular of a gantry (5) provided with means (8) of sliding in the horizontal rail (4).

5. Installation according to the preceding claim, **characterised in that** the said gantry comprises in particular a support rail (9) for the gripping elements (3) connected to a support rail (10) for the detector (11) for the presence of a separation element (14).

6. Installation according to any one of the preceding claims, **characterised in that** the gripping means (13) comprise claws whose movement is in particular controlled by the detector (11) for the presence of separation elements.

7. Installation according to the preceding claim, **characterised in that** the claws are adapted to the gripping of cardboard inserts.

8. Installation according to any one of the preceding claims, **characterised in that** the said presence detection means (11) comprises a microswitch housed in the said support rail (10).

9. installation according to any one of the preceding claims, **characterised in that** the means of stopping the sliding assembly (5) comprise mechanical and/or electrical stops disposed close to the middle of the carrier framework.

10. Installation according to any one of the preceding claims, **characterised in that** the control and slaving means also react to the time of immobilisation of the sliding assembly in the middle of the said carrier framework.

11. Installation according to any one of the preceding claims, **characterised in that** it also comprises safety gates intended to prevent access to the central area of the installation.

12. Installation according to any one of the preceding claims, **characterised in that** the carrier framework comprises at least two vertical beams (2) and two sub-assemblies on each side of the said beams.

13. Method of handling and positioning separation elements (14) between stacks of flat elements (V) disposed vertically, a first stack already being in place, a method **characterised in that** it consists of
- fixing at least one separation element (14) on a horizontally sliding assembly (5) disposed in a so-called idle position,
- awaiting an instruction to move the sliding assembly (5),
- bringing the sliding assembly (5) into a depositing area, as far as a stop means (16),
- depositing the separation element or elements (14) against a face of the stack,
- bringing another flat element (V) vertically against the separation element (14),
- raising the sliding assembly (5),
- causing it to translate in order to return to the idle position,
- lowering the sliding assembly (5).

14. Method according to the preceding claim, **characterised in that** each of the separation elements (14) is fixed independently on a gripping element (13) and **in that** they are also deposited individually.

15. Method according to any one of the method claims, **characterised in that** the closure of the gripping means (13) on the separation element (14) is slaved to the presence of the said gripping element (14), by virtue of a suitable detector (11).

16. Method according to any one of the method claims, **characterised in that** the opening of the gripping means is slaved to the depositing of at least one flat element (V) on the separation elements (14).

17. Method according to any one of the method claims, **characterised in that** access to the depositing area is made safe by virtue of retractable gates placed at the periphery of the said area.

18. Method according to any one of the method claims, **characterised in that** the separation elements (14) are cardboard inserts and **in that** the stacks are formed from glass plates (V).

19. Use of the installation according to any one of Claims 1 to 11 for producing stacks of glass plates (V) separated by elements such as cardboard inserts (14).
